# EUROPEAN PATENT SPECIFICATION

(11) **EP 4 619 354 B1**
(45) Date of publication and mention of the grant of the patent: **07.10.2026**
(21) Application number: 23806387.9
(22) Date of filing: 13.11.2023
(51) Int. Cl.: C04B 7/43

(54) **METHOD OF CALCINING A RAW MATERIAL TO OBTAIN A CEMENTITIOUS MATERIAL**
VERFAHREN ZUM KALZINIEREN EINES ROHMATERIALS ZUR HERSTELLUNG EINES ZEMENTARTIGEN MATERIALS
PROCÉDÉ DE CALCINATION D'UNE MATIÈRE PREMIÈRE POUR OBTENIR UN MATÉRIAU CIMENTAIRE

(30) Priority: 14.11.2022 EP 22020551
(43) Date of publication of application: 24.09.2025
(73) Proprietor: Holcim Technology Ltd., 6300 Zug (CH)
(72) Inventor: WEIHRAUCH, Michael, 5113 Holderbank (CH); OSSWALD, Ralf, 5113 Holderbank (CH); BLUM, Hans Rudolf, 5113 Holderbank (CH); BUCHER, Ernst, 5113 Holderbank (CH)
(74) Representative: SONN Patentanwälte GmbH & Co KG
(86) International application number: PCT/IB2023/061434
(87) International publication number: WO 2024/105534

(56) References cited:
- EP-A1- 4 015 479
- DE-A1- 4 435 871

## Description

The invention relates to a method of producing a cementitious material and to a plant for carrying out this method.

Cementitious materials are one of the principal ingredients of a concrete mixture. Cementitious materials can be categorised in two types of materials: hydraulic cements and supplementary cementitious materials (SCMs). Hydraulic cements set and harden by reacting chemically with water, which is called hydration. Portland cement is the most common hydraulic cement. SCMs are used in conjunction with Portland cement in concrete mixtures. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

In known processes for producing cement clinker, raw material is fed into a rotary kiln after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ form the flue gases, wherein respective separation plants involve high capital and operating expenditures.

EP4015479 discloses a plant comprising:
- a first heat exchanger being in heat exchange with a heat exchanger fluid circulating in a first circulation loop,
- a second heat exchanger for conducting a second heating step, the second heat exchanger being in heat exchange with a heat exchanger fluid circulating in a second circulation loop,
- an at least partly electrically heated calciner for calcining the heated raw material to obtain a calcined material, and that the difference between claim 1 and D1 is hence that there are no two heat exchangers for cooling present.

Therefore, the instant invention aims at further reducing the CO₂ footprint of a cement plant in a more efficient way. In order to solve these objectives, a first aspect of the invention provides a method of producing a cementitious material, comprising the steps of:
- providing a raw material,
- heating the raw material to a temperature of 100-120°C, said heating comprising at least the following steps:
- a first heating step comprising heating the raw material to a first temperature in heat exchange with a heat exchanger fluid circulating in a first circulation loop,
- a second heating step comprising heating the raw material to a second temperature in heat exchange with a heat exchanger fluid circulating in a second circulation loop, the second temperature being higher than the first temperature,
- calcining the heated raw material in an at least partly electrically heated calciner to obtain a calcined material,
- cooling the calcined material to a temperature of < 150°C for obtaining the cementitious material,
wherein sensible heat removed from the calcined material in said cooling is used as a heat source for heating the heat exchanger fluid circulating in the first and/or second circulation loop.

The invention is based on the idea to use electrical energy to decarbonize raw material instead of burning fossil fuels. The process of the present invention enables an efficient use of electrical energy for the production of cementitious materials, and reduces the use of fossil fuels and other alternative fuels which are traditionally used in the production of cementitious material. This enables the reduction of the CO₂ footprint of the production of cementitious material, as electricity has a lower CO₂ footprint than fossil or alternative fuels.

Since the heat that is required to decarbonize raw material is at least partly generated by the use of electrical energy in the calciner, the combustion of fuel, such as fossil fuel, in the calcination device can be reduced or eliminated.

The calcination step preferably comprises heating the raw material to a temperature of 650 to 1000 °C and holding this temperature for a period of time that is sufficient for calcining the raw material.

Another advantage of the invention is that the exhaust gas from the calciner has an increased CO₂ content. For example, if no fuel is burnt at all and the raw material mainly consists of limestone, the exhaust gas is substantially pure CO₂, so that the process operates without the requirement to separate CO₂ from flue gases. The CO₂ rich exhaust gas drawn off from the at least partly electrically heated calciner, after an optional CO₂ concentration step, may directly be used in a CO₂ processing or sequestration unit.

The CO₂ draw off from the calciner may be processed in various ways. It may be used as a raw material for the production of synthetic fuel or plastic components, or it may be sequestrated. It can be stored in different ways, such as, e.g., in stable carbonate mineral forms. The respective process is known as "carbon sequestration by mineral carbonation". The process involves reacting carbon dioxide with a carbonatable solid material, said material comprising metal oxides, in particular magnesium oxide (MgO) or calcium oxide (CaO), to form stable carbonates.

Alternatively, it is also possible to convert the CO₂ into a synthetic fuel by adding H₂. The synthetic fuel may be used in many ways, e.g. as an alternative fuel for the burner of the second thermal reactor. In this way, an additional decrease of the CO₂ footprint of the clinker production process is achieved. Alternatively, the synthetic fuel may be used as a fuel for other industries, e.g. as renewable aviation fuel.

The CO₂ or the CO₂ rich exhaust gas produced in the calciner has a temperature of approximately 650 to 1,000°C so that its thermal energy can be recycled before further processing the CO₂. In this connection, a preferred embodiment provides that the CO₂ drawn off from the calciner is fed through a heat exchanger, in which a fluid or gaseous medium is heated by heat exchange with the CO₂.

The sensible heat of the CO₂ or of the CO₂ rich exhaust gas may also be used in the first and/or second heating step or in an additional heating step to preheat the raw material before introducing it into the calciner.

According to the invention, the raw material is preheated in two steps before entering the at least partly electrically heated calciner and the calcined material is cooled in one or more, such as two steps. The advantage of having two interconnected heat exchangers is to be able to heat or cool the materials over a wide temperature range. This is particularly important in the case of heating, as heating via one heat exchanger would need a high amount of heat transferred to reach the desired temperature ranges. Such a high amount of heat would have a detrimental effect on the components of the heat exchanger: the lifetime of the steel components would be reduced due to the combined mechanical stress of conveying solid rock-type material, and the high temperatures.

Preferably, the first heating step is conducted to heat the raw material to a first temperature of 50-80°C and the second heating step is conducted to heat the raw material to a second temperature of 100-120°C.

Heating the raw material may also be conducted in more than two heating steps, such as in three heating steps.

Further, the invention provides for an energy transfer between the heating steps and the cooling step(s) by means of a heat exchanger fluid. In this way, heat may be recuperated from the calcined material in at least one cooling step and used in the heating steps to preheat the raw material so as to increase the energy efficiency of the process.

The heating steps may be carried out in separate heat exchangers or in consecutively arranged heat exchanger sections of a single heat exchanger unit. In any case, each heating step uses its own heat exchanger fluid circulation loop. This excludes embodiments, in which the flows of heat exchanger fluid used in the individual heating steps are arranged in a serial manner.

The first and the second and optionally the third circulation loop may be connected in parallel to a common feed line and a common return line for transporting the heat exchanger fluid between the heat exchanger(s) used for pre-heating the raw material and the heat exchanger(s) used for cooling the calcined material.

According to the invention, the sensible heat removed from the calcined material in the first and/or second cooling step is used as a heat source for heating the heat exchanger fluid circulating in the at least one of the circulation loops. Using the sensible heat as a heat source is understood to encompass both, direct and indirect use as a heat source. Thus, this does not require a direct heat exchange between the calcined material and the heat exchanger fluid circulating in the circulation loops. Rather, an indirect use of the sensible heat may also be conceived, e.g. by using energy exchange or transport means interposed between the calcined raw material and the heat exchanger fluid circulating in the circulation loops.

According to a preferred embodiment, a direct use of the sensible heat of the calcined material as a heat source is envisaged, wherein the first and/or second cooling step comprises bringing the heat exchanger fluid of at least one of the circulation loops into a heat exchanging relationship with the calcined material, while the heat exchanging fluid is heated.

To increase the thermal energy that is provided to the first and/or second heating step by the heat exchanger fluid circulating in the circulation loops, the temperature of said heat exchanger fluid may be raised by additional heating. To this end, the method of the invention may preferably be carried out so that the heat exchanger fluid that has been heated by energy transfer from the first and/or second cooling step is heated before being used for providing thermal energy to the first and/or second heating step. For example, an exhaust gas that is withdrawn from the calciner may be brought into a heat exchanging relationship with the heat exchanger fluid, while the exhaust gas is cooled.

At least partly heating the calciner by electrical energy means that the thermal energy needed for the heat treatment is obtained by transforming electrical energy into thermal energy. Various forms of electrical energy conversion may be applied, such as electrical resistance heating, microwave heating, induction heating, ultrasound heating and plasma torch heating. In a preferred embodiment, the calciner is heated by electrical energy only.

The heat transfer to the raw material may be performed by thermal conduction (establishing contact of the raw material with a heating surface), convection (using a heated gas to transfer the heat to the raw material) or radiation (e.g. using a plasma torch) or any combination of these heat transfer methods.

Various types of thermal reactors may be suitable for calcining the raw material by use of electrical energy. The calciner may be a rotary kiln that is optionally equipped with lifting and transporting elements, or a reactor with a rotating screw or transport elements inside, or a flash reactor or fluidized bed reactor or an apron conveyor type reactor or a vertical shaft reactor.

In preferred embodiments, the calciner shall be a rotary calciner, an apron conveyor type reactor or a vertical shaft reactor.

According to a preferred embodiment the heating steps are carried out in a continuous manner rather than in a batch-wise manner. In particular, the raw material is continuously transported from a raw material inlet to a raw material outlet of the respective heat exchanger while being heated. In this connection, a preferred embodiment provides that the first heating step comprises transporting the raw material through a first heat exchanger and heating the raw material in said first heat exchanger and/or wherein the second heating step comprises transporting the raw material through a second heat exchanger and heating the raw material in said second heat exchanger.

In particular, conveying means may be provided for transporting raw material from the raw material inlet to the raw material outlet of the first or second heat exchanger while being heated, in order to achieve an efficient energy transfer to the raw material.

The first and/or second heat exchanger may be configured to provide indirect heating of the raw material. For example, a solid heat transfer medium is heated by electrical energy, which is contacted with the raw material in order to transfer thermal energy to the raw material by thermal conduction.

Preferably, the first and/or second heat exchanger comprises at least one contact heating element that is arranged to be in heat exchanging contact with the raw material while the same is being conveyed from the inlet to the outlet, wherein said at least one contact heating element is configured to be heated by electrical energy.

According to a preferred embodiment, the raw material is transported through the first and/or second heat exchanger by means of a screw conveyor while being heated. A screw conveyor is characterised by a direct contact between the raw material and the conveying means, i.e. the conveyor screw of the screw conveyor, wherein a large surface area is provided for transferring heat to the raw material.

A screw conveyor is understood to be a mechanism that uses a rotating helical screw blade, the conveyor screw, arranged within a tube, to move the raw meal along the rotation axis of the screw from an inlet to an outlet of the conveyor.

Preferably, a conveyor screw of the screw conveyor is configured as a heating element that is heated by electrical energy, such as by resistance heating.

In particular, an electrically heated screw conveyor as described in WO 2019/228696 may be used.

The first and/or second heat exchanger may be heated by electrical energy in addition to the use of the sensible heat from the heat exchanger fluid circulating in the first and second circulation loops. Alternatively, the first and/or second heat exchanger may operate without electrical heating.

In order to achieve an efficient energy transfer between the heat exchanger fluid circulating in the first and second circulation loops, a preferred embodiment provides that the raw material is transported by means of a screw conveyor and heated by conducting the heat exchanger fluid through a conveyer screw of the screw conveyor and/or trough a jacket surrounding the conveyor screw.

Additional energy input into the first/and or second heat exchanger may also be achieved by combusting a renewable fuel and/or by combusting hydrogen. The term "renewable fuel" is understood to mean fuels that originate from renewable sources or are produced from renewable resources, such as biofuels (e.g. vegetable oil, biomass, and biodiesel). This is in contrast to non-renewable fuels such as natural gas, LPG (propane), petroleum and other fossil fuels.

As to the first and/or second cooling step for cooling the calcined material, a preferred embodiment provides that cooling is carried out in a continuous manner rather than in a batch-wise manner. In particular, the raw material is continuously transported from a raw material inlet to a raw material outlet of the respective heat exchanger while being cooled. In this connection, a preferred embodiment provides that the first cooling step comprises transporting the raw material through a third heat exchanger and cooling the calcined material in said third heat exchanger and/or wherein the second cooling step comprises transporting the raw material through a fourth heat exchanger and cooling the calcined material in said fourth heat exchanger.

Preferably, the calcined material is transported by means of a screw conveyor and cooled by conducting the heat exchanger fluid through a conveyer screw of the screw conveyor and/or trough a jacket surrounding the conveyor screw.

In the first, second, third and/or fourth heat exchanger, the heat exchanger fluid can be used in counter-current flow or in parallel flow with the raw material. Preferably, in the first and/or second heat exchanger, the heat exchanger fluid is used in parallel flow with the raw material. Preferably, in the third and/or fourth heat exchanger, the heat exchanger fluid is used in counter-current flow with the raw material.

Different kinds of raw material may be used in the method of the invention. Preferably, raw material is selected from geogenic or anthropogenic sources, including clay, gypsum, lithium, construction demolition waste, sludges and limestone.

The raw material may be provided in solid, dry form or as a slurry. In case of a solid dry material, it may be pre-treated by mechanical processes that include crushing or milling and homogenisation to produce a raw meal. In case the raw material is a slurry with a relative high amount of water, the slurry can be additionally pre-treated so as to remove excess water. Waste heat from the first or second heat exchanger can for example be used to evaporate this excess water.

According to a second aspect, the invention refers to a plant for carrying out a method according to the first aspect of the invention, comprising:
- a first heat exchanger for conducting a first heating step, the first heat exchanger being in heat exchange with a heat exchanger fluid circulating in a first circulation loop,
- a second heat exchanger for conducting a second heating step, the second heat exchanger being in heat exchange with a heat exchanger fluid circulating in a second circulation loop,
- an at least partly electrically heated calciner for calcining the heated raw material in a to obtain a calcined material,
- a third heat exchanger for conducting a first cooling step,
- a fourth heat exchanger for conducting a second cooling step,
wherein the third and/or fourth heat exchanger is arranged in a heat exchanging relationship with the heat exchanger fluid circulating in the first and/or second circulation loop so that the sensible heat removed from the calcined material in the first and/or second cooling step is used as a heat source for heating the heat exchanger fluid circulating in the first and/or second circulation loop.

Preferably, at least one of the first and second heat exchangers and at least one of the third and fourth heat exchangers is a screw conveyor comprising a cylindrical housing and a conveyor screw arranged to rotate within the cylindrical housing, wherein the conveyor screw and/or the housing comprises heat exchanger surfaces that are arranged to transfer heat between the raw material or the calcined material, respectively, and the heat exchanger fluid.

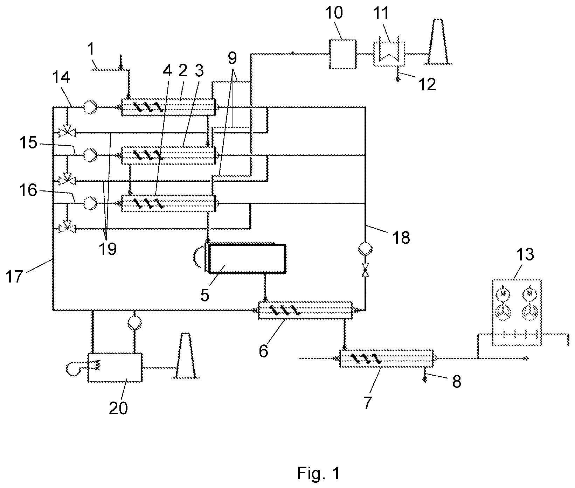

The invention will now be described in more detail with reference to the attached drawings. Fig. 1 is a schematic illustration of a first embodiment of a plant for producing a cementitious material.

The plant shown in Fig. 1 comprises a first heat exchanger 2, to which raw material 1 is fed, a second heat exchanger 3, an additional heat exchanger 4, a calciner 5, a third heat exchanger 6 and a fourth heat exchanger 7, from which the cooled cementitious material 8 is withdrawn.

In the first heat exchanger 2, the raw material 1 is heated to a temperature of, e.g., 50-80°C. The partly heated raw material is withdrawn from the first heat exchanger 2 and introduced into the second heat exchanger 3, where it is heated to a temperature of, e.g., 80-100°C. The partly heated raw material is withdrawn from the second heat exchanger 3 and introduced into the additional heat exchanger 4, where it is heated to a temperature of, e.g., 100-120°C. Each of the heat exchangers 2, 3 and 4 may be designed as a heated screw conveyor. The number and size of the heat exchangers may depend on the capacity and moisture of the raw material and might vary.

As a result of the heating steps, the raw material is dried, wherein water vapor is generated, which is withdrawn from the heat exchangers 2,3,4 via a respective vapor extraction line 9. The vapor may optionally be fed into a heat recovery system, comprising a filter 10 and a heat exchanger 11, in which the water vapor is condensed by heat exchange with a heat exchanger medium and condensate 12 is withdrawn.

The material that has been calcined in the calciner 5 is cooled in the third heat exchanger 6 to, e.g., 290°C, wherein the third heat exchanger may be designed as a thermal oil-operated cooling screw. In a second cooling step, the calcined material is cooled to, e.g., <150°C by means of the fourth heat exchanger 7, which may be configured as a cooling screw. The latter cooling screw may be operated with water. The second cooling step is preferably operated as a closed water circuit, using an adiabatic cooling tower 13 to reduce the temperature in the water circuit.

Heat is transferred from the first cooling step to the three heating steps in a closed loop via a heat transfer medium, such as thermal oil. Herein, a first circulation loop 14 for heat exchanger fluid is provided, which transfers heat between the third heat exchanger 6 and the first heat exchanger 2. A second circulation loop 15 for heat exchanger fluid is provided, which transfers heat between the third heat exchanger 6 and the second heat exchanger 3. A third circulation loop 16 for heat exchanger fluid is provided, which transfers heat between the third heat exchanger 6 and the additional heat exchanger 4. The circulation loops 14,15,16 share a common feed line 17 and a common return line 18. Each of the circulation loops 14,15,16 comprises a by-pass line 19.

An additional heater 20 in the thermal oil circuit may be provided to initially heat the system to a desired operating temperature. The heater 20 remains hot in case of short production interruptions. The heater 20 can also use waste heat sources of a connected clinker production plant.

## Claims

1. A method of producing a cementitious material, comprising the steps of:
- providing a raw material,
- heating the raw material to a temperature of 100-120°C, said heating comprising at least the following steps:
- a first heating step comprising heating the raw material to a first temperature in heat exchange with a heat exchanger fluid circulating in a first circulation loop (14),
- a second heating step comprising heating the raw material to a second temperature in heat exchange with a heat exchanger fluid circulating in a second circulation loop (15), the second temperature being higher than the first temperature,
- calcining the heated raw material in an at least partly electrically heated calciner (5) to obtain a calcined material,
- cooling the calcined material to a temperature of < 150°C for obtaining the cementitious material,
wherein sensible heat removed from the calcined material in said cooling is used as a heat source for heating the heat exchanger fluid circulating in the first (14) and/or second (15) circulation loop.

2. Method according to claim 1, wherein said cooling comprises the following steps:
- conducting a first cooling step comprising cooling the calcined material to a third temperature of < 300°C,
- conducting a second cooling step comprising cooling the calcined material to a fourth temperature of < 150°C,
and wherein the sensible heat removed from the calcined material in the first and/or second cooling step is used as the heat source for heating the heat exchanger fluid circulating in the first (14) and/or second (15) circulation loop.

3. Method according to claim 1 or 2, wherein the raw material is selected from geogenic or anthropogenic sources.

4. Method according to claim 1, 2 or 3, wherein said cooling, in particular the first and/or second cooling step, comprises bringing the heat exchanger fluid of the first (14) and/or second (15) circulation loop into a heat exchanging relationship with the calcined material, while the heat exchanging fluid is heated.

5. Method according to any one of claims 1 to 4, wherein the first heating step comprises transporting the raw material through a first heat exchanger (2) and heating the raw material in said first heat exchanger (2) and/or wherein the second heating step comprises transporting the raw material through a second heat exchanger (3) and heating the raw material in said second heat exchanger (3).

6. Method according to any one of claims 2 to 5, wherein the first cooling step comprises transporting the raw material through a third heat exchanger (6) and cooling the calcined material in said third heat exchanger (6) and/or wherein the second cooling step comprises transporting the raw material through a fourth heat exchanger (7) and cooling the calcined material in said fourth heat exchanger (7).

7. Method according to claim 5 or 6, wherein the raw material is transported by means of a screw conveyor and heated by conducting the heat exchanger fluid through a conveyer screw of the screw conveyor and/or trough a jacket surrounding the conveyor screw.

8. Method according to claim 6 or 7, wherein the calcined material is transported by means of a screw conveyor and cooled by conducting the heat exchanger fluid through a conveyer screw of the screw conveyor and/or trough a jacket surrounding the conveyor screw.

9. Method according to any one of claims 1 to 8, wherein the calciner is operated by electrical energy only.

10. Method according to any one of claims 6 to 9, wherein the first (14) and the second (15) circulation loops comprise a common feed line (17) for feeding the heat exchanger fluid to the first (2) and the second (3) heat exchangers, respectively, and a common return line (18) for returning the heat exchanger fluid from the first (2) and the second (3) heat exchangers, respectively, to the third (6) and/or fourth (7) heat exchanger.

11. A plant for carrying out a method according to any one of claims 1 to 8, comprising:
- a first heat exchanger (2) for conducting a first heating step, the first heat exchanger (2) being in heat exchange with a heat exchanger fluid circulating in a first circulation loop (14),
- a second heat exchanger (3) for conducting a second heating step, the second heat exchanger (3) being in heat exchange with a heat exchanger fluid circulating in a second circulation loop (15),
- an at least partly electrically heated calciner (5) for calcining the heated raw material to obtain a calcined material,
- a third heat exchanger (6) for conducting a first cooling step,
- a fourth heat exchanger (7) for conducting a second cooling step,
wherein the third (6) and/or fourth (7) heat exchanger is arranged in a heat exchanging relationship with the heat exchanger fluid circulating in the first (14) and/or second (15) circulation loop so that the sensible heat removed from the calcined material in the first and/or second cooling step is used as a heat source for heating the heat exchanger fluid circulating in the first (14) and/or second (15) circulation loop.

12. Plant according to claim 11, wherein at least one of the first (2) and second (3) heat exchangers and at least one of the third (6) and fourth (7) heat exchangers is a screw conveyor comprising a cylindrical housing and a conveyor screw arranged to rotate within the cylindrical housing, wherein the conveyor screw and/or the housing comprises heat exchanger surfaces that are arranged to transfer heat between the raw material or the calcined material, respectively, and the heat exchanger fluid.

13. Plant according to claim 11 or 12, wherein the first (14) and the second (15) circulation loops comprise a common feed line (17) for feeding the heat exchanger fluid to the first (2) and the second (3) heat exchangers, respectively, and a common return line (18) for returning the heat exchanger fluid from the first (2) and the second (3) heat exchangers, respectively, to the third (6) and/or fourth (7) heat exchanger.

## Patentansprüche

1. Ein Verfahren zur Herstellung eines zementartigen Materials, umfassend die Schritte:
- Bereitstellen eines Rohmaterials,
- Erhitzen des Rohmaterials auf eine Temperatur von 100-120°C, wobei besagtes Erhitzen mindestens die folgenden Schritte umfasst:
- einen ersten Erhitzungsschritt, umfassend das Erhitzen des Rohmaterials auf eine erste Temperatur im Wärmeaustausch mit einem in einem ersten Zirkulationskreislauf (14) zirkulierenden Wärmetauscherfluid,
- einen zweiten Erhitzungsschritt, umfassend das Erhitzen des Rohmaterials auf eine zweite Temperatur im Wärmeaustausch mit einem in einem zweiten Zirkulationskreislauf (15) zirkulierenden Wärmetauscherfluid, wobei die zweite Temperatur höher als die erste Temperatur ist,
- Kalzinieren des erhitzten Rohmaterials in einem zumindest teilweise elektrisch beheizten Kalzinator (5), um ein kalziniertes Material zu erhalten,
- Kühlen des kalzinierten Materials auf eine Temperatur von < 150°C zum Erhalten des zementartigen Materials,
wobei bei besagtem Kühlen aus dem kalzinierten Material abgeführte fühlbare Wärme als eine Wärmequelle zum Erhitzen des in dem ersten (14) und/oder zweiten (15) Zirkulationskreislauf zirkulierenden Wärmetauscherfluids verwendet wird.

2. Verfahren nach Anspruch 1, wobei besagtes Kühlen die folgenden Schritte umfasst:
- Durchführen eines ersten Kühlschritts, umfassend das Kühlen des kalzinierten Materials auf eine dritte Temperatur von < 300°C,
- Durchführen eines zweiten Kühlschritts, umfassend das Kühlen des kalzinierten Materials auf eine vierte Temperatur von < 150°C,
und wobei die in dem ersten und/oder zweiten Kühlschritt aus dem kalzinierten Material abgeführte fühlbare Wärme als die Wärmequelle zum Erhitzen des in dem ersten (14) und/oder zweiten (15) Zirkulationskreislauf zirkulierenden Wärmetauscherfluids verwendet wird.

3. Verfahren nach Anspruch 1 oder 2, wobei das Rohmaterial aus geogenen oder anthropogenen Quellen ausgewählt ist.

4. Verfahren nach Anspruch 1, 2 oder 3, wobei besagtes Kühlen, insbesondere der erste und/oder zweite Kühlschritt, das Bringen des Wärmetauscherfluids des ersten (14) und/oder zweiten (15) Zirkulationskreislaufs in eine wärmeaustauschende Beziehung mit dem kalzinierten Material umfasst, während das Wärmetauscherfluid erhitzt wird.

5. Verfahren nach einem der Ansprüche 1 bis 4, wobei der erste Erhitzungsschritt das Transportieren des Rohmaterials durch einen ersten Wärmetauscher (2) und das Erhitzen des Rohmaterials in besagtem ersten Wärmetauscher (2) umfasst und/oder wobei der zweite Erhitzungsschritt das Transportieren des Rohmaterials durch einen zweiten Wärmetauscher (3) und das Erhitzen des Rohmaterials in besagtem zweiten Wärmetauscher (3) umfasst.

6. Verfahren nach einem der Ansprüche 2 bis 5, wobei der erste Kühlschritt das Transportieren des Rohmaterials durch einen dritten Wärmetauscher (6) und das Kühlen des kalzinierten Materials in besagtem dritten Wärmetauscher (6) umfasst und/oder wobei der zweite Kühlschritt das Transportieren des Rohmaterials durch einen vierten Wärmetauscher (7) und das Kühlen des kalzinierten Materials in besagtem vierten Wärmetauscher (7) umfasst.

7. Verfahren nach Anspruch 5 oder 6, wobei das Rohmaterial mittels eines Schneckenförderers transportiert wird und erhitzt wird, indem das Wärmetauscherfluid durch eine Förderschnecke des Schneckenförderers und/oder durch einen die Förderschnecke umgebenden Mantel geleitet wird.

8. Verfahren nach Anspruch 6 oder 7, wobei das kalzinierte Material mittels eines Schneckenförderers transportiert wird und gekühlt wird, indem das Wärmetauscherfluid durch eine Förderschnecke des Schneckenförderers und/oder durch einen die Förderschnecke umgebenden Mantel geleitet wird.

9. Verfahren nach einem der Ansprüche 1 bis 8, wobei der Kalzinator nur mit elektrischer Energie betrieben wird.

10. Verfahren nach einem der Ansprüche 6 bis 9, wobei der erste (14) und der zweite (15) Zirkulationskreislauf eine gemeinsame Zufuhrleitung (17) zum Zuführen des Wärmetauscherfluids zu dem ersten (2) bzw. dem zweiten (3) Wärmetauscher sowie eine gemeinsame Rücklaufleitung (18) zum Rückführen des Wärmetauscherfluids von dem ersten (2) bzw. dem zweiten (3) Wärmetauscher zu dem dritten (6) und/oder vierten (7) Wärmetauscher umfassen.

11. Eine Anlage zur Durchführung eines Verfahrens nach einem der Ansprüche 1 bis 8, umfassend:
- einen ersten Wärmetauscher (2) zum Durchführen eines ersten Erhitzungsschritts, wobei der erste Wärmetauscher (2) im Wärmeaustausch mit einem in einem ersten Zirkulationskreislauf (14) zirkulierenden Wärmetauscherfluid steht,
- einen zweiten Wärmetauscher (3) zum Durchführen eines zweiten Erhitzungsschritts, wobei der zweite Wärmetauscher (3) im Wärmeaustausch mit einem in einem zweiten Zirkulationskreislauf (15) zirkulierenden Wärmetauscherfluid steht,
- einen zumindest teilweise elektrisch beheizten Kalzinator (5) zum Kalzinieren des erhitzten Rohmaterials, um ein kalziniertes Material zu erhalten,
- einen dritten Wärmetauscher (6) zum Durchführen eines ersten Kühlschritts,
- einen vierten Wärmetauscher (7) zum Durchführen eines zweiten Kühlschritts,
wobei der dritte (6) und/oder vierte (7) Wärmetauscher in einer wärmeaustauschenden Beziehung mit dem in dem ersten (14) und/ oder zweiten (15) Zirkulationskreislauf zirkulierenden Wärmetauscherfluid angeordnet ist, sodass die in dem ersten und/oder zweiten Kühlschritt aus dem kalzinierten Material abgeführte fühlbare Wärme als eine Wärmequelle zum Erhitzen des in dem ersten (14) und/oder zweiten (15) Zirkulationskreislauf zirkulierenden Wärmetauscherfluids verwendet wird.

12. Anlage nach Anspruch 11, wobei mindestens einer von dem ersten (2) und zweiten (3) Wärmetauscher und mindestens einer von dem dritten (6) und vierten (7) Wärmetauscher ein Schneckenförderer ist, umfassend ein zylindrisches Gehäuse und eine Förderschnecke, die derart angeordnet ist, dass sie innerhalb des zylindrischen Gehäuses rotiert, wobei die Förderschnecke und/oder das Gehäuse Wärmetauscherflächen umfasst, die derart angeordnet sind, dass sie Wärme zwischen dem Rohmaterial bzw. dem kalzinierten Material und dem Wärmetauscherfluid übertragen.

13. Anlage nach Anspruch 11 oder 12, wobei der erste (14) und der zweite (15) Zirkulationskreislauf eine gemeinsame Zufuhrleitung (17) zum Zuführen des Wärmetauscherfluids zu dem ersten (2) bzw. dem zweiten (3) Wärmetauscher sowie eine gemeinsame Rücklaufleitung (18) zum Rückführen des Wärmetauscherfluids von dem ersten (2) bzw. dem zweiten (3) Wärmetauscher zu dem dritten (6) und/oder vierten (7) Wärmetauscher umfassen.

## Revendications

1. Un procédé de production d'un matériau cimentaire, comprenant les étapes consistant à :
- fournir une matière première,
- chauffer la matière première à une température de 100-120°C, ledit chauffage comprenant au moins les étapes suivantes :
- une première étape de chauffage comprenant le chauffage de la matière première à une première température en échange thermique avec un fluide d'échange thermique circulant dans une première boucle de circulation (14),
- une deuxième étape de chauffage comprenant le chauffage de la matière première à une deuxième température en échange thermique avec un fluide d'échange thermique circulant dans une deuxième boucle de circulation (15), la deuxième température étant supérieure à la première température,
- calciner la matière première chauffée dans un calcinateur (5) chauffé au moins partiellement électriquement pour obtenir un matériau calciné,
- refroidir le matériau calciné à une température < 150°C pour obtenir le matériau cimentaire,
dans lequel la chaleur sensible retirée du matériau calciné lors dudit refroidissement est utilisée comme source de chaleur pour chauffer le fluide d'échange thermique circulant dans la première (14) et/ou la deuxième (15) boucle de circulation.

2. Procédé selon la revendication 1, dans lequel ledit refroidissement comprend les étapes suivantes :
- réaliser une première étape de refroidissement comprenant le refroidissement du matériau calciné à une troisième température < 300°C,
- réaliser une deuxième étape de refroidissement comprenant le refroidissement du matériau calciné à une quatrième température < 150°C,
et dans lequel la chaleur sensible retirée du matériau calciné dans la première et/ou la deuxième étape de refroidissement est utilisée comme source de chaleur pour chauffer le fluide d'échange thermique circulant dans la première (14) et/ou la deuxième (15) boucle de circulation.

3. Procédé selon la revendication 1 ou 2, dans lequel la matière première est choisie parmi des sources géogéniques ou anthropo-géniques.

4. Procédé selon la revendication 1, 2 ou 3, dans lequel ledit refroidissement, en particulier la première et/ou la deuxième étape de refroidissement, comprend la mise en relation d'échange thermique du fluide d'échange thermique de la première (14) et/ ou de la deuxième (15) boucle de circulation avec le matériau calciné, pendant que le fluide d'échange thermique est chauffé.

5. Procédé selon l'une quelconque des revendications 1 à 4, dans lequel la première étape de chauffage comprend le transport de la matière première à travers un premier échangeur de chaleur (2) et le chauffage de la matière première dans ledit premier échangeur de chaleur (2) et/ou dans lequel la deuxième étape de chauffage comprend le transport de la matière première à travers un deuxième échangeur de chaleur (3) et le chauffage de la matière première dans ledit deuxième échangeur de chaleur (3).

6. Procédé selon l'une quelconque des revendications 2 à 5, dans lequel la première étape de refroidissement comprend le transport de la matière première à travers un troisième échangeur de chaleur (6) et le refroidissement du matériau calciné dans ledit troisième échangeur de chaleur (6) et/ou dans lequel la deuxième étape de refroidissement comprend le transport de la matière première à travers un quatrième échangeur de chaleur (7) et le refroidissement du matériau calciné dans ledit quatrième échangeur de chaleur (7).

7. Procédé selon la revendication 5 ou 6, dans lequel la matière première est transportée au moyen d'un transporteur à vis et chauffée en conduisant le fluide d'échange thermique à travers une vis de transport du transporteur à vis et/ou à travers une enveloppe entourant la vis de transport.

8. Procédé selon la revendication 6 ou 7, dans lequel le matériau calciné est transporté au moyen d'un transporteur à vis et refroidi en conduisant le fluide d'échange thermique à travers une vis de transport du transporteur à vis et/ou à travers une enveloppe entourant la vis de transport.

9. Procédé selon l'une quelconque des revendications 1 à 8, dans lequel le calcinateur fonctionne uniquement à l'énergie électrique.

10. Procédé selon l'une quelconque des revendications 6 à 9, dans lequel la première (14) et la deuxième (15) boucle de circulation comprennent une ligne d'alimentation commune (17) pour alimenter le fluide d'échange thermique vers le premier (2) et le deuxième (3) échangeur de chaleur, respectivement, et une ligne de retour commune (18) pour ramener le fluide d'échange thermique du premier (2) et du deuxième (3) échangeur de chaleur, respectivement, vers le troisième (6) et/ou quatrième (7) échangeur de chaleur.

11. Une installation pour la mise en œuvre d'un procédé selon l'une quelconque des revendications 1 à 8, comprenant :
- un premier échangeur de chaleur (2) pour réaliser une première étape de chauffage, le premier échangeur de chaleur (2) étant en échange thermique avec un fluide d'échange thermique circulant dans une première boucle de circulation (14),
- un deuxième échangeur de chaleur (3) pour réaliser une deuxième étape de chauffage, le deuxième échangeur de chaleur (3) étant en échange thermique avec un fluide d'échange thermique circulant dans une deuxième boucle de circulation (15),
- un calcinateur (5) chauffé au moins partiellement électriquement pour calciner la matière première chauffée afin d'obtenir un matériau calciné,
- un troisième échangeur de chaleur (6) pour réaliser une première étape de refroidissement,
- un quatrième échangeur de chaleur (7) pour réaliser une deuxième étape de refroidissement,
dans laquelle le troisième (6) et/ou le quatrième (7) échangeur de chaleur est disposé en relation d'échange thermique avec le fluide d'échange thermique circulant dans la première (14) et/ou la deuxième (15) boucle de circulation de sorte que la chaleur sensible retirée du matériau calciné dans la première et/ou la deuxième étape de refroidissement est utilisée comme source de chaleur pour chauffer le fluide d'échange thermique circulant dans la première (14) et/ou la deuxième (15) boucle de circulation.

12. Installation selon la revendication 11, dans laquelle au moins un parmi le premier (2) et le deuxième (3) échangeur de chaleur et au moins un parmi le troisième (6) et le quatrième (7) échangeur de chaleur est un transporteur à vis comprenant un boîtier cylindrique et une vis de transport agencée pour tourner à l'intérieur du boîtier cylindrique, dans laquelle la vis de transport et/ou le boîtier comprend des surfaces d'échangeur de chaleur qui sont agencées pour transférer la chaleur entre la matière première ou le matériau calciné, respectivement, et le fluide d'échange thermique.

13. Installation selon la revendication 11 ou 12, dans laquelle la première (14) et la deuxième (15) boucle de circulation comprennent une ligne d'alimentation commune (17) pour alimenter le fluide d'échange thermique vers le premier (2) et le deuxième (3) échangeur de chaleur, respectivement, et une ligne de retour commune (18) pour ramener le fluide d'échange thermique du premier (2) et du deuxième (3) échangeur de chaleur, respectivement, vers le troisième (6) et/ou quatrième (7) échangeur de chaleur.
